# DEMANDE DE BREVET EUROPEEN

(11) **EP 0 982 225 A1**
(43) Date de publication de la demande: **01.03.2000**
(21) Numéro de dépôt: 98810830.4
(22) Date de dépôt: 21.08.1998
(51) Int. Cl.: B62J 11/00

(54) **Dispositif de protection pour bouteille de bicyclette ou véhicule semblable**

(71) Demandeur: Lumberton International Inc., Panama (PA)
(72) Inventeur: Bonard, Yves, 1206 Genève (CH); Moret, Philippe, 1260 Nyon (CH); Fodor, Thomas, 1260 Nyon (CH)
(74) Mandataire: Saam, Christophe

(57) **Abrégé**

Le dispositif de protection est destiné à protéger des salissures une bouteille (3) disposée dans un support (2) fixé sur un élément (10) d'un cadre de bicyclette.

Le dispositif comprend essentiellement une portion cylindrique (4) apte à coulisser le long de moyens de coulissement (6) entre une position fermée, où au moins la portion supérieure de la bouteille est protégée, et une position ouverte, où la bouteille est accessible, ainsi qu'un couvercle (5) rabattable afin de fermer l'ouverture supérieure de la portion cylindrique (4).

Diverses formes d'exécution sont décrites.

## Description

La présente invention concerne un dispositif de protection d'une bouteille montée sur un support installé sur un cadre de bicyclette ou sur n'importe quelle autre partie envisageable d'une bicyclette ou d'un véhicule semblable, tel que mentionné dans le préambule de la revendication 1.

Par le terme bicyclette ou véhicule semblable il est entendu notamment tout véhicule à deux roues entraîné par des pédales et/ou un moteur, comme aussi par exemple un vélomoteur ou une motocyclette. Le même terme englobe aussi d'autres types de véhicules entraînés par des pédales et pouvant comporter plus de deux roues.

Il est connu depuis de nombreuses années d'équiper les cadres de bicyclettes d'un support, sur ou dans lequel il est possible de fixer une bouteille, afin de permettre au cycliste de se désaltérer en cours de trajet. Le support est généralement fixé par deux vis à une pièce du cadre de la bicyclette et comprend au moins un élément faisant ressort afin d'éviter que la bouteille ne s'échappe du support, par exemple lors d'un trajet comportant des secousses.

L'inconvénient majeur d'un tel support est que l'embout de la bouteille, soit la portion de celle-ci que le cycliste met à la bouche pour en boire le contenu, n'est pas protégé des salissures de la route. Ainsi, lors d'un trajet, la bouteille et notamment son embout se recouvrent de poussières et de boue, ce qui nécessite un arrêt du cycliste pour nettoyer cet embout ou alors, si le cycliste ne veut ou ne peut s'arrêter, il doit réussir à nettoyer l'embout tout en roulant, ce qui peut être assez dangereux.

Un premier but de l'invention est donc de proposer un dispositif de protection pour une bouteille disposée dans un support installé sur une bicyclette ou sur un véhicule semblable, permettant d'éviter que l'embout de la bouteille ne se salisse lors du trajet.

Un deuxième but de l'invention est de proposer un dispositif de protection facile à utiliser, ne nécessitant pas de manoeuvres compliquées de la part du cycliste pour son ouverture ou sa fermeture, permettant de retirer et réinstaller la bouteille dans son support de manière conventionnel et qui surtout ne gêne en aucun cas le cycliste dans son mouvement de pédalage.

Un autre but de l'invention est que ce dispositif de protection puisse être installé sur n'importe quel type de support existant pour n'importe quel type de bouteille, monté en n'importe quelle position habituelle possible sur n'importe quel type de cadre de n'importe quel type de bicyclette ou de véhicule semblable.

Enfin, le dispositif doit être simple de conception, pas soumis à des ennuis de fonctionnement et ne nécessitant pas d'autre entretien qu'un nettoyage régulier.

Ces différents buts sont obtenus par un dispositif de protection tel que décrit dans la partie caractérisante de la revendication 1, trois formes d'exécution particulières étant décrites dans les revendications 8, 12 et 15. Les revendications dépendantes décrivent chacune des variantes d'exécution ou précisent des caractéristiques techniques particulières. Les revendications 16 à 18 décrivent les formes possibles de commercialisation du dispositif.

D'autres avantages de l'invention apparaissent dans la description qui suit, décrivant particulièrement trois formes d'exécution de l'invention, cette description étant à lire en regard du dessin annexé comportant les figures où :
La figure 1 montre une vue de côté d'une portion d'un cadre de bicyclette sur lequel sont montés un support de bouteille conventionnel ainsi qu'un dispositif de protection selon l'invention,
la figure 2 montre une vue agrandie du support et d'un dispositif selon une première forme d'exécution de l'invention,
la figure 3 montre une coupe partielle de la portion d'articulation du couvercle mobile de la première forme d'exécution de l'invention,
la figure 4 montre une coupe transversale à hauteur de la ligne IV-IV de la figure 2, la bouteille étant enlevée.
la figure 5 montre une vue semblable à celle de la figure 2 d'une deuxième forme d'exécution de l'invention,
la figure 6 montre une coupe partielle de la portion d'articulation du couvercle mobile de la deuxième forme d'exécution de l'invention,
la figure 7 montre une coupe transversale à hauteur de la ligne VII-VII de la figure 5, la bouteille étant enlevée,
la figure 8 montre une vue semblable à celle des figures 2 et 5 d'une troisième forme d'exécution de l'invention,
la figure 9 montre une vue depuis l'arrière, selon la ligne IX-IX de la figure 8, et
la figure 10 montre une coupe transversale à hauteur de la ligne X-X de la figure 8, la bouteille étant enlevée.

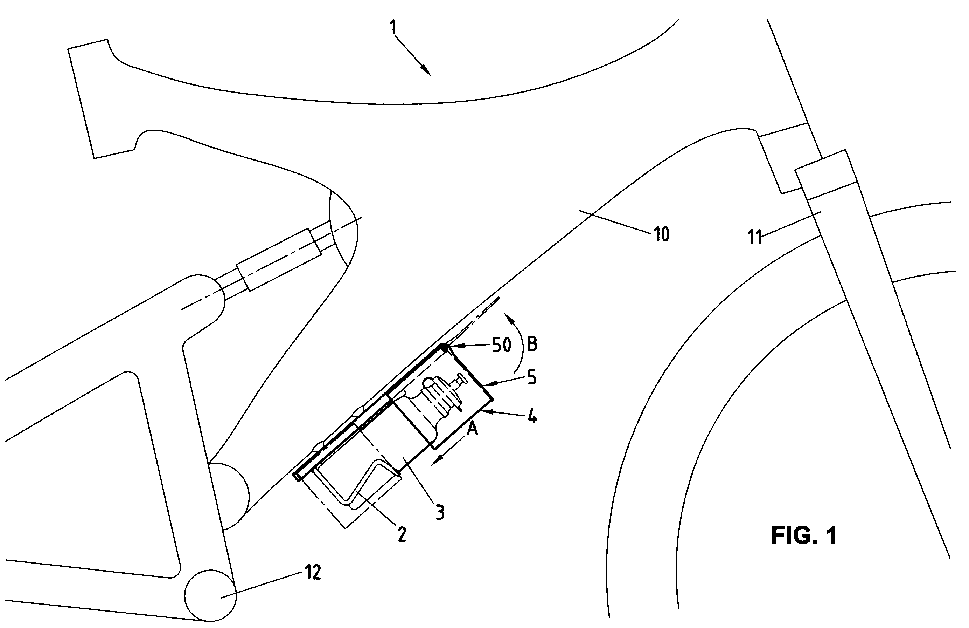

A la figure 1 on a une portion d'une bicyclette 1 où on voit notamment un élément de cadre 10, une portion de la fourche 11 portant la roue avant, ainsi que la portion du cadre supportant le pédalier 12. Un support 2 contenant une bouteille 3 d'une boisson est fixé, par exemple au moyen de deux vis, sur un élément du cadre 10, de préférence sur la portion inférieure reliant la fourche 11 et le support de pédalier 12. Sur le type de bicyclette représenté, le support 2 ne peut être fixé qu'à l'endroit représenté sur la figure, mais sur d'autres types de bicyclettes, il pourrait être fixé en d'autres endroits. La bouteille 3 est maintenue dans le support 2 par effet de ressort dudit support la bouteille 3 étant installée, respectivement retirée dudit support, en la saisissant par sa paroi latérale et en la faisant glisser selon son axe longitudinal. La figure 1 montre notamment le peu de place à disposition pour l'installation et la manoeuvre d'un dispositif de protection de la bouteille, le support 2 étant fixé ici sur un élément de cadre 10 situé entre les jambes du cycliste.

Le dispositif de protection est constitué de manière générale d'une enveloppe cylindrique 4, et d'un couvercle 5. Ces deux éléments sont vus ici en coupe. L'enveloppe cylindrique 4 a une longueur légèrement plus grande que le col de la bouteille mais plus faible que la longueur de la bouteille, et un diamètre intérieur plus grand que le diamètre maximum du support 2. L'enveloppe cylindrique 4 est montée de manière coulissante selon la flèche A relativement au support 2, étant apte à prendre une première position fermée représentée par les traits forts sur la figure et une deuxième position ouverte, représentée par les traits interrompus sur la figure. Le couvercle 5 a un diamètre correspondant ou légèrement plus grand que le diamètre de l'enveloppe cylindrique 4, de manière à recouvrir entièrement l'ouverture de cette enveloppe en position fermée et possède des moyens d'articulation 50 permettant de basculer, selon la flèche B, le couvercle 5 vers une position ouverte, comme représentée en traits interrompus sur la figure ou vers une position fermée comme représentée en traits forts.

Par position fermée de l'enveloppe cylindrique 4 et du couvercle 5, on entend une position selon laquelle ces deux éléments coopèrent pour recouvrir et protéger au moins la portion supérieure de la bouteille 3 et notamment son embout, et par position ouverte on entend une position selon laquelle ces mêmes éléments dégagent complètement la portion supérieure de la bouteille et éventuellement une portion supérieure du support, de manière à pouvoir retirer la bouteille 3 du support 2, ou la réinstaller, de manière conventionnelle, sans être gêné par lesdits éléments.

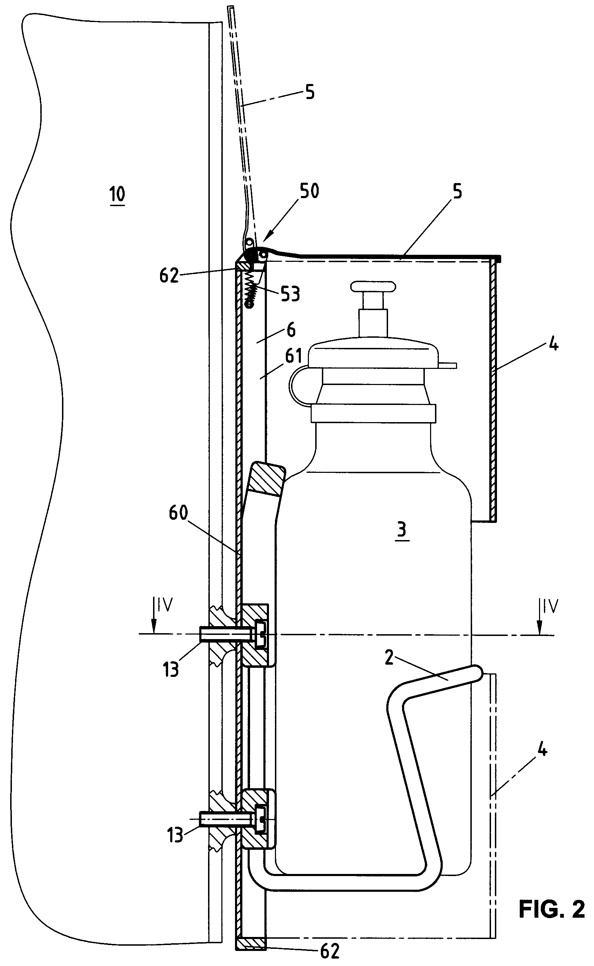

Dans la première forme d'exécution représentée aux figures 2, 3 et 4, les mouvements de l'enveloppe cylindrique 4 et du couvercle 5 sont indépendants.

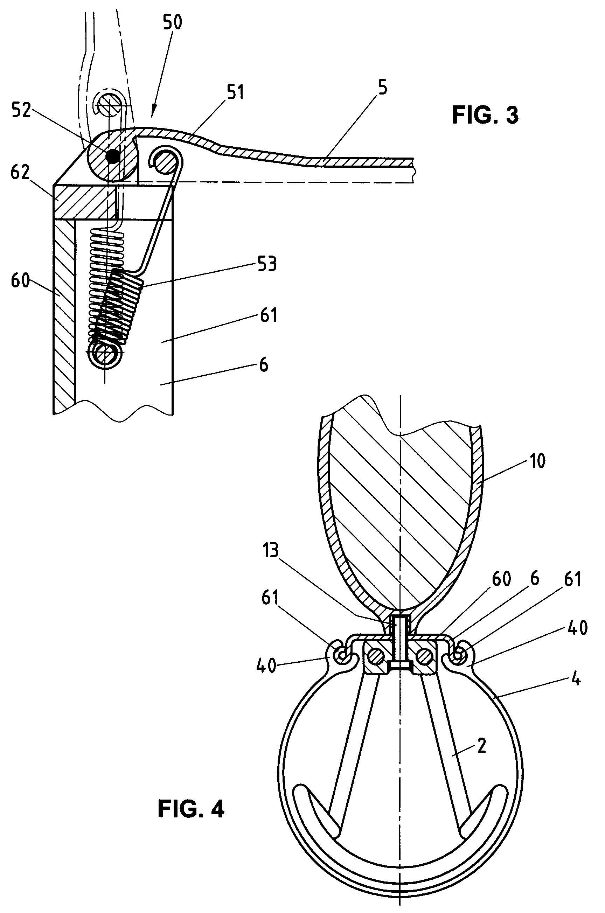

En prenant les figures 2 et 4, on voit que le support 2 est fixé de manière conventionnelle sur l'élément de cadre 10, au moyen par exemple de deux vis 13 engagées dans des trous filetés correspondants aménagés dans l'élément de cadre 10, si ce n'est qu'un rail de coulissement 6 est fixé simultanément par les mêmes vis 13, entre le support 2 et l'élément de cadre 10. Comme on le voit à la figure 4, le rail de coulissement est formé d'une pièce longiligne en forme de U, la partie centrale 60 du U servant de fixation alors que les deux ailes latérales 61 sont chacune aménagées pour permettre le glissement de l'enveloppe cylindrique 4. A cet effet, deux bordures 40 formées sur les deux génératrices de l'enveloppe cylindrique limitant ladite enveloppe cylindrique 4, sont formées de manière à fixer ladite enveloppe cylindrique 4 sur les ailes latérales 61, tout en lui permettant de coulisser le long desdites ailes latérales 61 du rail de coulissement 6. Ainsi, le cycliste peut d'une main saisir l'enveloppe cylindrique 4 et la faire coulisser le long du rail de coulissement 6, entre une position de fermeture, représentée en traits continus sur la figure 2 où l'enveloppe cylindrique 4 entoure le col et l'embout de la bouteille 3, et une position d'ouverture, représentée en traits discontinus sur la même figure, où l'enveloppe cylindrique entoure une portion inférieure de la bouteille 3, laissant accessible le col et l'embout de cette dernière. Des butées 62 peuvent être prévues afin de limiter le coulissement possible de l'enveloppe cylindrique 4 sur le rail de coulissement 6 entre ces deux positions mentionnées et empêcher une sortie intempestive de l'enveloppe cylindrique 4 hors du rail de coulissement 6. Pour cette forme d'exécution, le coulissement de l'enveloppe cylindrique 4 sur le rail de coulissement 6 est de préférence dit gras, c'est-à-dire qu'il offre une résistance suffisante pour que l'enveloppe cylindrique 4 ne se déplace pas d'elle-même sous l'effet des secousses le long du rail de coulissement.

Le couvercle 5 est de forme essentiellement plate et circulaire, son diamètre étant au moins égal au diamètre extérieur de l'enveloppe cylindrique 4, de manière à pouvoir complètement boucher l'ouverture vers le haut de ladite enveloppe cylindrique, comme on le voit représenté en traits continus sur la figure 2. Des moyens d'articulation 50, attenants à la portion supérieure du rail de coulissement 6, permettent de faire basculer le couvercle 5 entre la position de fermeture mentionnée et une position ouverte, représentée en traits discontinus sur la figure, laissant libre ladite ouverture. Une forme d'exécution de l'articulation 50 est représentée en détail à la figure 3. Selon cette forme d'exécution, le couvercle 5 est prolongé d'une languette 51 en direction du rail de coulissement 6, ladite languette étant formée pour pivoter autour d'un axe 52 fixé à l'extrémité supérieure du rail de coulissement 6. Le couvercle est donc apte à prendre une position fermée et une position ouverte. Selon une première variante, le pivotement du couvercle 5 autour de l'axe 52 est suffisamment gras ou résistant pour que le couvercle reste dans la position que lui a donnée l'utilisateur. Selon une deuxième variante, le pivotement autour de l'axe 52 est beaucoup plus libre et le couvercle 5 est muni d'un ressort de rappel 53, qui maintient le couvercle 5 en position fermée ou en position ouverte, vu que comme représenté, en position ouverte l'axe de travail du ressort a dépassé la position de l'axe 52 et appuie l'extrémité opposée du couvercle 5 contre l'élément de cadre 10.

Ainsi, lorsque le dispositif de protection est en position fermée, la bouteille 3 et notamment son col et son embout sont protégés des salissures par l'enveloppe cylindrique 4 entourant lesdites portions de la bouteille 3 et par le couvercle 5 qui referme l'ouverture supérieure de ladite enveloppe cylindrique. Lorsqu'il désire accéder à la bouteille 3, le cycliste peut, avec une seule main, relever le couvercle 5, faire glisser vers le bas l'enveloppe cylindrique 4 puis saisir la bouteille et l'extraire hors du support 2, de manière tout à fait habituelle. Ultérieurement il peut de même replacer la bouteille dans le support 2, toujours selon la manière habituelle, faire glisser vers le haut l'enveloppe cylindrique 4 et rabattre le couvercle 5. Les manoeuvres décrites ci-dessus se font uniquement dans l'espace restreint libre sous l'élément du cadre 10 de la bicyclette, sans risque de heurt contre un autre élément de la bicyclette, ni contre les jambes du cycliste. Ces manoeuvres peuvent facilement être effectuées d'une seule main en roulant.

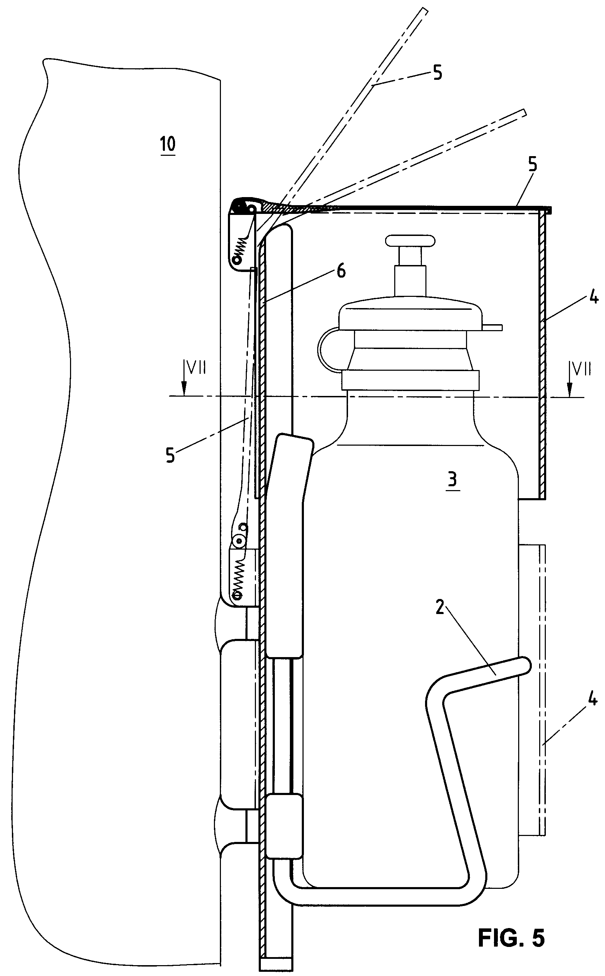

Une deuxième forme d'exécution d'un dispositif de protection est représentée aux figures 5, 6 et 7. Dans cette forme d'exécution, le mouvement du couvercle 5 est commandé par le mouvement de l'enveloppe cylindrique 4.

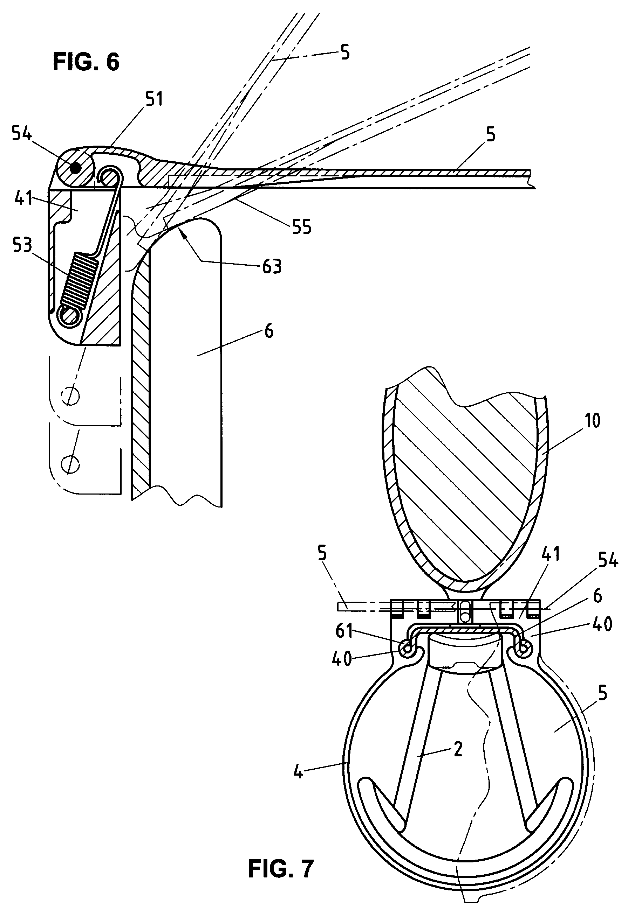

Comme on le voit à la figure 7, l'enveloppe cylindrique 4 est fermée autour du rail de coulissement 6 par une portion arrière 41 reliant les deux bordures 40 par lesquelles l'enveloppe cylindrique 4 est fixée et peut coulisser sur les ailes 61 du rail de coulissement 6. Comme on le voit à la figure 6, le couvercle 5 est monté, par la languette 51 autour d'un axe 54, fixé cette fois sur la portion arrière 41 de l'enveloppe cylindrique 4. Le ressort de rappel 53 est chargé de maintenir le couvercle 5 en position fermée. Dans cette forme d'exécution, l'extrémité supérieure du rail de coulissement 6 présente un profil arqué 63 convexe.

Ainsi, lorsque le cycliste fait coulisser l'enveloppe cylindrique 4 vers le bas, la surface inférieure 55 du couvercle 5 vient glisser le long du profil 63 alors que l'ensemble du dispositif est entraîné vers le bas. Comme on le voit à la figure 6, le couvercle 5 s'ouvre automatiquement et comme on le voit à la figure 5, en position ouverte, le couvercle 5 vient se loger dans un espace aménagé entre le rail de glissement 6 et l'élément de cadre 10. Pour refermer le dispositif, il suffit de faire remonter l'enveloppe cylindrique 4, le couvercle 5 suivant alors le chemin inverse sur le profil 63, le ressort 53 aidant à la fermeture complète du couvercle 5. Pour cette forme d'exécution, si le coulissement de l'enveloppe cylindrique 4 est de préférence gras, comme pour la première forme d'exécution, il est préférable que le pivotement du couvercle 5 autour de l'axe 54 soit relativement libre.

Cette forme d'exécution est décrite ici avec un profil convexe 63 permettant de faire glisser le couvercle 5 pour son ouverture, d'autres formes de profils ou d'autres moyens peuvent être aussi prévus à cet effet.

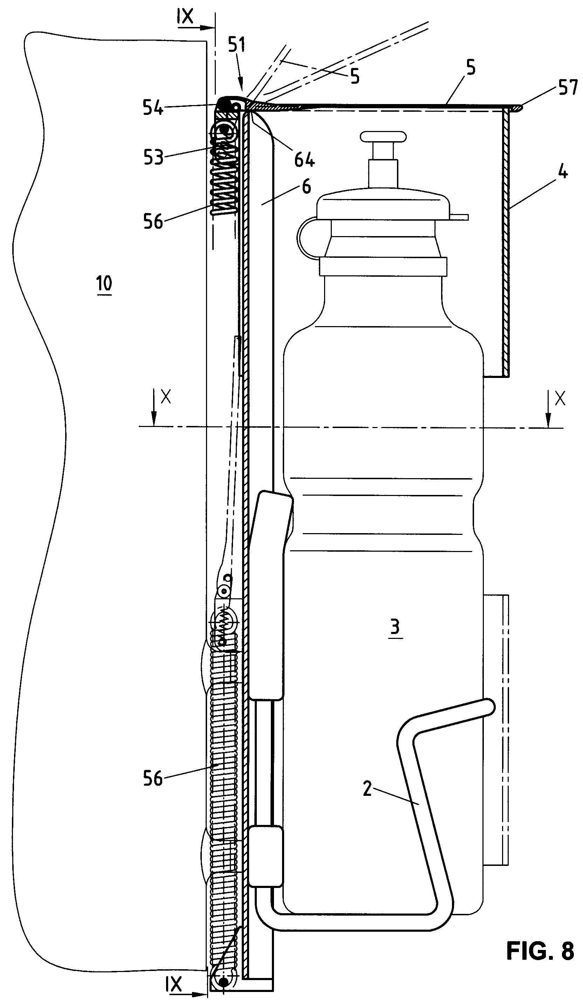

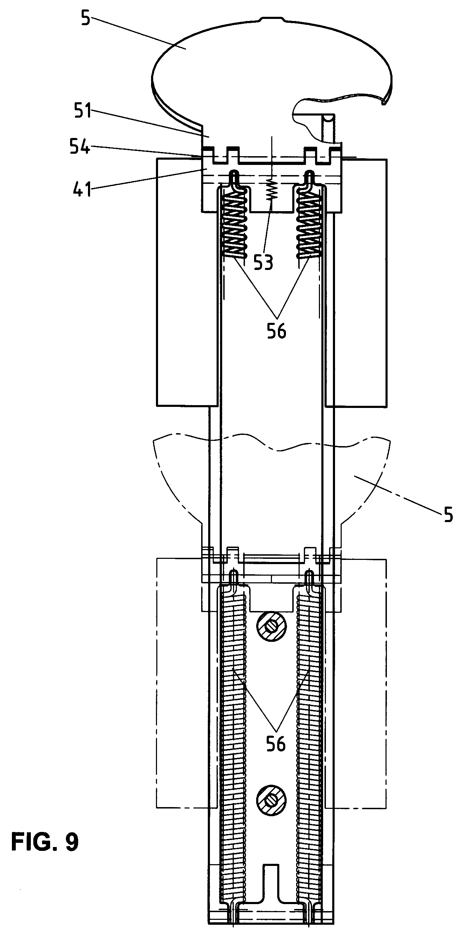

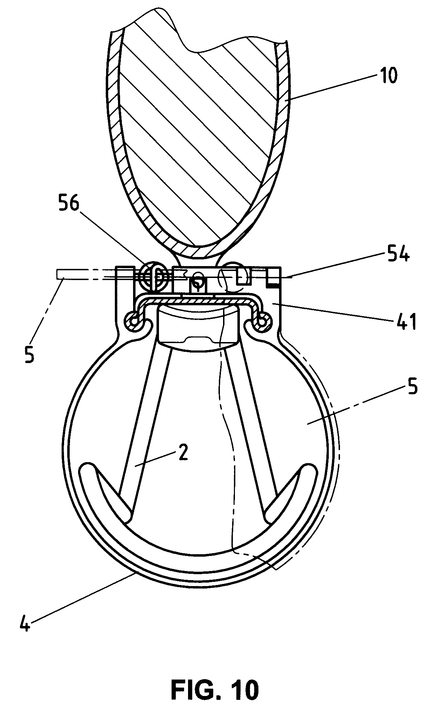

Une troisième forme d'exécution d'un dispositif de protection est représentée aux figures 8, 9 et 10. Dans cette forme d'exécution, le mouvement de l'enveloppe cylindrique 4 est commandé par le mouvement du couvercle 5.

Comme on le voit sur ces figures, le couvercle 5 est monté, comme pour la forme d'exécution précédente, en pivotement par sa languette 51 autour de l'axe 54, fixé à la portion arrière 41 de l'enveloppe cylindrique 4. Un moyen à ressort, par exemple le ressort 53, est chargé de maintenir le couvercle 5 en position fermée. L'ensemble du dispositif est entraîné vers la position d'ouverture par des moyens à ressort, représentés ici par les deux ressorts de traction 56, fixés d'une part à la portion arrière 41 et d'autre part à l'extrémité inférieure du rail de coulissement 6. La portion supérieure 64 du rail de coulissement 6 est profilée de manière à empêcher une ouverture intempestive du couvercle 5, par exemple sous l'effet de secousses, comportant par exemple une arête ou un profil adéquat sur sa face supérieure.

Avec cette forme d'exécution, le cycliste peut donc ouvrir le dispositif simplement en appliquant une légère traction sur la portion de saisie d'extrémité 57 du couvercle, ce qui décroche la portion arrière de la languette 51 de sa position de maintien sur l'extrémité 64 du rail de coulissement et ce qui permet au dispositif complet d'être entraîné vers le bas, respectivement de s'ouvrir complètement par ouverture du couvercle 5 et abaissement de l'enveloppe cylindrique 4 entraînant le couvercle 5 dans le même mouvement, ces mouvements étant provoqués par la traction exercée par les moyens à ressort 56. Pour fermer le dispositif, le cycliste saisit l'enveloppe cylindrique 4, la ramène vers sa position de fermeture en tendant les moyens à ressort 56, le couvercle 5 se refermant automatiquement sous l'action du ressort 53.

Ainsi, l'utilisation du dispositif selon cette forme d'exécution est très simple puisque pour l'ouverture il suffit de soulever légèrement la portion de saisie 57, le reste des mouvements d'ouverture s'effectuant automatiquement, alors que pour la fermeture il suffit de relever l'enveloppe cylindrique 4, le reste des mouvements de fermeture s'effectuant automatiquement.

Dans cette forme d'exécution, il est préférable que le coulissement de l'enveloppe cylindrique 4 sur le rail de coulissement 6 ainsi que le pivotement du couvercle 5 sur l'axe 54 soient relativement libres.

Comme pour la forme d'exécution précédente, d'autres moyens que la forme décrite de la portion supérieure 64 du rail de coulissement 6 peuvent être prévus pour empêcher l'ouverture intempestive du couvercle 5. D'autre part, les moyens à ressort 56 peuvent être protégés des salissures par un capot de recouvrement ou par des gaines extensibles, ces moyens n'étant pas représentés sur les figures afin de ne pas les surcharger.

A partir de cette forme d'exécution, une variante peut être envisagée selon laquelle l'ouverture et/ou la fermeture du dispositif est commandée par un bouton ou un levier, disposé sur le dispositif ou déporté, par exemple sur le guidon de la bicyclette.

La figure 8 montre une bouteille 3 d'un autre type que celle représentée sur les figures 1, 2 et 5. Ceci est fait uniquement afin d'illustrer le fait que n'importe quelle forme d'exécution décrite d'un dispositif de protection peut accepter une bouteille de n'importe quel type généralement utilisée sur les bicyclettes. Dans le cas présent ou la bouteille de la figure 8 est plus longue que celle des autres figures, il suffit d'avoir un rail de coulissement 6 plus long d'autant. Ainsi, de préférence la partie centrale 60 du rail de coulissement 6 comprend une fente longitudinale plutôt que deux trous pour le passage des vis 13, ce qui permet d'adapter la position du dispositif sur l'élément de cadre 10 selon la longueur de la bouteille.

Les figures montrent une seule forme d'exécution d'un support 2 de bouteille. Il est évident que le dispositif décrit peut s'adapter à un support 2 de n'importe quelle construction, laissant accessible la portion supérieure de la bouteille, la seule contrainte étant que l'enveloppe cylindrique 4 puisse coulisser par-dessus le support.

Le dispositif de protection doit être léger afin de ne pas alourdir la bicyclette et doit être solide afin de résister aux manipulations et aux chocs. Si les éléments à ressort sont de préférence métalliques, les autres pièces constitutives peuvent être métalliques ou en matériau synthétique. Les matériaux utilisés pour les pièces ayant un mouvement relatif entre elles, les bordures 40 sur les ailes latérales 61 et la languette 51 sur l'axe 52 ou 54 ou le même axe sur la portion supérieure du rail de coulissement 6 ou sur la portion arrière 41, sont choisis de préférence afin de permettre le type de mouvement relatif mentionné, gras ou libre, ceci de préférence sans qu'il soit nécessaire de lubrifier ces éléments.

De préférence le dispositif est facilement démontable afin de pouvoir être facilement nettoyé. Dans ce cas, pour toutes les formes d'exécution, on peut prévoir par exemple que l'une des butées 62 est escamotable, démontable ou encliquetable, de manière à pouvoir en détacher l'enveloppe cylindrique.

Diverses dispositions constructives ont été décrites pour chacune des formes d'exécution proposées, il est évident que d'autres dispositions constructives peuvent être envisagées, par exemple les moyens de maintien et de coulissement de l'enveloppe cylindrique 4 sur le rail de coulissement 6 peuvent être conçus différemment de ce qui est décrit plus haut, ou alors les moyens à ressort de la troisième forme d'exécution peuvent être conçus différemment, par exemple un seul ressort 56 et deux ressorts 53.

Diverses variantes de construction peuvent être envisagées en ce qui concerne l'enveloppe cylindrique 4. Tout d'abord le mouvement d'ouverture a été décrit et représenté comme étant limité de telle manière qu'une portion de la bouteille 3 et du support 2 restent recouverts par l'enveloppe cylindrique 4 en position ouverte. Dans le cas d'un support 2 où l'extraction et/ou le replacement de la bouteille 3 dans le support 2 ne se fait pas selon un mouvement longitudinal comme décrit, mais par un mouvement transversal, les moyens de coulissement et de butée du dispositif peuvent être prévus pour que l'enveloppe 4, en position ouverte, dégage complètement la bouteille permettant d'y accéder comme requis par le support. D'autre part la longueur de l'enveloppe cylindrique n'a pas été indiquée, cette longueur peut être quelconque tant qu'au moins la portion supérieure comprenant l'embout de la bouteille 3 est protégée. Cette enveloppe peut être plus longue que représenté sur les figures et recouvrir plus complètement le corps de la bouteille. En variante, il est aussi possible de prolonger l'enveloppe cylindrique 4, du côté opposé à celui en relation avec le couvercle 5, par une enveloppe souple, rétractable en accordéon, dont l'extrémité inférieure serait fixée au bas du support 2, ceci afin de mieux protéger le bas de la bouteille. A partir de cette dernière variante, l'enveloppe cylindrique 4 peut n'être constituée que d'un anneau, coulissant comme indiqué, et d'une enveloppe souple rétractable, fixée d'un côté à l'anneau et de l'autre côté au bas du support.

Les variations de construction indiquées ici ne sont pas limitatives, d'autres variations pouvant être envisagées.

Le dispositif de protection a été décrit comme étant un accessoire ajouté à un support de bouteille existant ; on pourrait tout aussi bien concevoir un dispositif de protection directement intégré à un support, ayant les mêmes fonctionnalités que décrites.

Le dispositif de protection tel que proposé remplit donc parfaitement les buts fixés, il protège efficacement la portion supérieure de la bouteille des salissures, il est très simple d'utilisation pour le cycliste, qui peut le manoeuvrer tout en roulant, ne nécessite pas de manoeuvres compliquées et est adaptable à tous les genres de bicyclettes, de support et de bouteilles prévus, pouvant être monté en n'importe quel endroit du cadre de la bicyclette. Surtout, son maniement n'entrave pas les mouvements des jambes du cycliste, en aucun moment une pièce quelconque du dispositif ne se trouvant sur le trajet effectué par ces jambes. De plus, le dispositif est simple de conception, donc peu soumis à des ennuis de fonctionnement, il est facilement nettoyable et ne nécessite aucun autre entretien.

Dans la description qui précède, le support et le dispositif ont été décrits comme installés sur le cadre de la bicyclette ; rien n'empêche de les disposer en un autre endroit adéquat, par exemple sur le guidon, sur la fourche avant ou derrière la selle. De même il est parlé d'un seul ensemble support, bouteille et dispositif de protection sur une bicyclette, il est évident que la bicyclette peut être équipée de plusieurs ensembles des éléments mentionnés, ces ensembles pouvant être montés séparément sur la bicyclette ou pouvant être regroupés, en ayant par exemple un double support pour deux bouteilles muni de deux dispositifs de protection. La description a été faite pour un dispositif installé sur une bicyclette, l'homme du métier sait faire les adaptations nécessaires pour l'installer sur un véhicule semblable à une bicyclette.

## Revendications

1. Dispositif de protection d'une bouteille (3) disposée sur un support (2) fixé à un élément (10) d'une bicyclette (1) ou d'un véhicule semblable,
caractérisé en ce qu'il comprend
une enveloppe cylindrique (4) apte à recouvrir latéralement au moins une portion d'embout de la bouteille (3) et un couvercle (5) apte à refermer la portion de bout supérieure de l'enveloppe cylindrique (4),
l'enveloppe cylindrique (4) étant apte à être déplacée longitudinalement entre une position de fermeture et une position d'ouverture libérant au moins ladite portion d'embout,
le couvercle (5) étant apte à basculer entre une position de fermeture et une position d'ouverture.

2. Dispositif selon la revendication 1, caractérisé en ce qu'il comprend en outre des moyens de coulissement (6,61) fixés sur ledit élément de cadre de bicyclette (10) ou audit support (2), ladite enveloppe cylindrique (4) comportant des moyens (40) aptes à coopérer avec lesdits moyens de coulissement (61) afin de passer de ladite position de fermeture à ladite position d'ouverture.

3. Dispositif selon la revendication 2, caractérisée en ce que lesdits moyens de coulissement (6) sont constitués d'un rail essentiellement en forme de U, la portion centrale (60) dudit rail étant fixée sur ledit élément de cadre de bicyclette (10) ou audit support (2), les deux ailes latérales (61) dudit rail formant rails de coulissement pour deux coulisses (40) aménagées sur deux génératrices limitant ladite enveloppe cylindrique (4).

4. Dispositif selon l'une des revendications 2 ou 3, caractérisé en ce que le déplacement de l'enveloppe cylindrique (4) sur les moyens de coulissement (6,61) est limité par au moins une butée de fin de course (62).

5. Dispositif selon l'une des revendications précédentes, caractérisé en ce que le couvercle (5) comprend une portion en saillie (51) située essentiellement dans le plan dudit couvercle et apte à pivoter autour d'un axe (52 ;54) perpendiculaire à la direction de déplacement de l'enveloppe cylindrique (4).

6. Dispositif selon la revendication 5, caractérisé en ce que le couvercle (5) comprend un premier moyen à ressort (53) agissant pour refermer ledit couvercle.

7. Dispositif selon l'une des revendications 5 ou 6, caractérisé en ce que ledit axe (52) est fixé sur une portion supérieure des moyens de coulissement 6).

8. Dispositif selon l'une des revendications précédentes, caractérisé en ce que le déplacement de l'enveloppe cylindrique (4) est commandé indépendamment du basculement du couvercle (5).

9. Dispositif selon la revendication 6, caractérisé en ce que ledit axe (54) est fixé sur une portion arrière (41) de l'enveloppe cylindrique (4).

10. Dispositif selon la revendication 9, caractérisé en ce que la portion supérieure du moyen de coulissement (6) comprend des moyens (63) aptes à permettre le basculement du couvercle.

11. Dispositif selon la revendication 10, caractérisé en ce que lesdits moyens sont constitués d'une portion d'arc (63) aménagée sur la portion supérieure du moyen de coulissement, apte à permettre le basculement du couvercle (5) venant en appui glissant par une portion de sa surface inférieure (55) sur ladite portion d'arc (63).

12. Dispositif selon l'une des revendications 1 ou 10 ou 11, caractérisé en ce que le basculement du couvercle (5) est commandé par le coulissement de l'enveloppe cylindrique (4).

13. Dispositif selon la revendication 9, caractérisé en ce que le déplacement pour l'ouverture de l'enveloppe cylindrique (4) est commandé par un deuxième moyen à ressort (56).

14. Dispositif selon la revendication 13, caractérisé en ce que la portion supérieure du moyen de coulissement (6) est formée en moyen d'arrêt (64), afin de retenir le couvercle (5) en position fermée.

15. Dispositif selon l'une des revendications 1 ou 14, caractérisé en ce que le glissement pour l'ouverture de l'enveloppe cylindrique (4) est commandé par le basculement d'ouverture du couvercle (5).

16. Dispositif selon l'une des revendications précédentes, caractérisé en ce qu'il est prévu pour être ajouté à un support (2) existant.

17. Support (2) pour une bouteille (3) destiné à être fixé à un élément (10) d'une bicyclette (1) ou d'un véhicule semblable, caractérisé en ce qu'il est équipé d'un dispositif de protection selon l'une des revendications 1 à 14.

18. Bicyclette ou véhicule semblable équipé d'au moins un dispositif selon l'une des revendications 1 à 16 ou d'au moins un support selon la revendication 17.
